# FASCICULE DE BREVET EUROPEEN

(11) **EP 0 928 732 B1**
(45) Date de publication et mention de la délivrance du brevet: **06.10.2004**
(21) Numéro de dépôt: 98403190.6
(22) Date de dépôt: 17.12.1998
(51) Int. Cl.: B61L 3/12, H04J 3/06

(54) **Procédé de sécurisation d'une communication entre deux stations de radiocommunication**
Verfahren zur Sicherung einer Übertragung zwischen zwei Funkübertragungseinrichtungen
Method for securing a communication between two radio communication devices

(30) Priorité: 06.01.1998 FR 9800031
(43) Date de publication de la demande: 14.07.1999
(73) Titulaire: ALCATEL, 75008 Paris (FR)
(72) Inventeur: Papini, Hélène, 91400 Orsay (FR); Simon, François, 91290 La Norville (FR)
(74) Mandataire: Lamoureux, Bernard

(56) Documents cités:
- WO-A-93/06662
- WO-A-96/27822
- DE-A- 3 043 461
- DE-A- 19 501 994
- FR-A- 2 607 769
- DOOL VAN DEN F: "SYNCHRONIZATION ASPECTS OF ATD-IBC NETWORKS" INNOVATIONS IN SWITCHING TECHNOLOGY, PHOENIX, ARIZONA, MARCH 15-20, 1987, vol. PART. 4, no. SYMP. 1987, 15 mars 1987, pages B12.1.1-B12.1.5, XP000670368 INSTITUTE OF ELECTRICAL AND ELECTRONICS ENGINEERS

## Description

La présente invention concerne un procédé de sécurisation de la référence temporelle d'un message transmis dans un réseau de radiocommunication, notamment entre deux stations mobiles ou entre une station mobile et une station fixe. Plus particulièrement, l'invention trouve une application dans des réseaux de radiocommunication demandant un haut niveau de sécurisation, tels les réseaux de radiocommunication ferroviaires.

Ces réseaux de radiocommunication ferroviaires permettent l'échange d'informations entre deux trains se trouvant à proximité (se croisant par exemple) ou entre un train et une station au sol.

Les informations véhiculées entre un train et une station au sol peuvent transiter dans les deux sens :
- du train vers la station au sol pour des ordres transmis par le train au réseau ferroviaire (commande à distance d'un aiguillage, par exemple.)
- de la station au sol vers le train, pour des informations sur l'état du réseau ferroviaire, et netamment sur des événements exceptionnels tels la mise hors service d'un tronçon du réseau.

Ces possibilités évoquées ne forment pas un ensemble exhaustif des types d'informations pouvant être transmises sur un tel réseau.

On comprend toutefois à la lecture de ces quelques exemples que le besoin de sécurisation des messages transmis sur le réseau est extrêmement fort. Par exemple, dans le cas de la fermeture d'un tronçon de voie à la suite du stationnement imprévu d'un autre train, une erreur de transmission du message vers le train suivant est susceptible d'engendrer un accident mortel.

Parmi les erreurs de transmission pouvant avoir lieu sur un réseau de radiocommunication, on peut relever deux types d'erreurs distincts : les erreurs sur le contenu du message et les erreurs sur la référence temporelle.

Le problème de la résolution des erreurs sur le contenu d'un message transmis sur un canal de communication quel qu'il soit, est un problème classique pour lequel il existe un grand nombre de solutions, basées notamment sur des techniques de codage correcteur d'erreurs.

Le problème de la référence temporelle apparaît dès lors que les messages ont une pertinence évoluant avec le temps.

Une erreur dans le référencement temporel d'un message peut être dû à un engorgement d'un des circuits de l'émetteur. Par exemple, le message à transmettre peut être bloqué durant un certain temps dans le circuit chargé du codage correcteur d'erreurs.

Une autre cause peut être le retard engendré par le canal de transmission liant l'émetteur et le récepteur.

Pour reprendre un exemple évoqué précédemment, un message signifiant qu'un tronçon d'un réseau ferroviaire est fermé à la circulation, doit avoir une date précisément déterminée. Dans le cas d'un réseau de radiocommunication ferroviaire, donc, il apparaît clairement que les messages doivent être datés puisqu'étant relatifs à des événements évoluant dans le temps.

La date d'émission du message doit donc figurer dans le contenu du message et être éventuellement sécurisée par les mécanismes de correction d'erreurs évoqués ci-dessus.

Cependant, ce mécanisme de datation est insuffisant dès lors que l'émetteur et le récepteur ne partagent pas une horloge commune. Or, dans les réseaux de radiocommunication comportant au moins une station mobile, il est impossible de faire en sorte que les différentes stations partagent une même horloge commune.

Le document ETCS SRS, ERRIA200, volume 1, décrit une solution pour résoudre ce problème consistant à effectuer un dialogue de message entre l'émetteur et le récepteur. Un même message contient une signature temporelle à la fois de l'émetteur et du récepteur, de sorte qu'il est possible de détecter une anomalie. Toutefois, une telle solution soufre du fait qu'elle nécessite l'établissement d'un dialogue.

Le but de la présente invention est de proposer un procédé de sécurisation de la transmission d'un message entre deux stations mobiles ou entre une station mobile et une station fixe, palliant l'insuffisance de cet état de l'art, en diversifiant les procédés de transmission de la date vers le récepteur.

Plus précisément, l'objet de la présente invention est un procédé de transmission d'un message dit initial (M_{I}) entre deux stations de radiocommunication, éventuellement mobiles, consistant pour une première station de radiocommunication, à insérer une date fournie par une horloge (H) dans ledit message initial afin de former un message sortant (M), caractérisé en ce qu'il comporte une étape consistant à transmettre vers la seconde station de radiocommunication ledit message sortant (M) et les dates fournies par ladite horloge (H).

Un autre objet de l'invention concerne un émetteur permettant de mettre en oeuvre ce procédé. Plus précisément, il concerne station de radiocommunication, éventuellement mobile, comportant une horloge (H), un moyen (C) permettant d'insérer des dates fournies par ladite horloge (H) à des messages initiaux (M_{I}) afin de donner des messages sortants (M), lesdites dates étant celles d'élaboration desdits messages sortants (M), et un moyen d'émission sur ledit réseau de radiocommunication desdits messages sortants (M), caractérisé en ce qu'il dispose de surcroît d'un moyen pour émettre les dates fournies par ladite horloge (H).

D'autres objets et caractéristiques de la présente invention apparaîtront à . la lecture de la description suivante d'exemples de mises en oeuvre, faite en relation avec les dessins ci-annexés dans lesquels :
La figure 1 illustre une première mise en oeuvre de l'invention.
La figure 2 illustre une deuxième mise en oeuvre de l'invention.

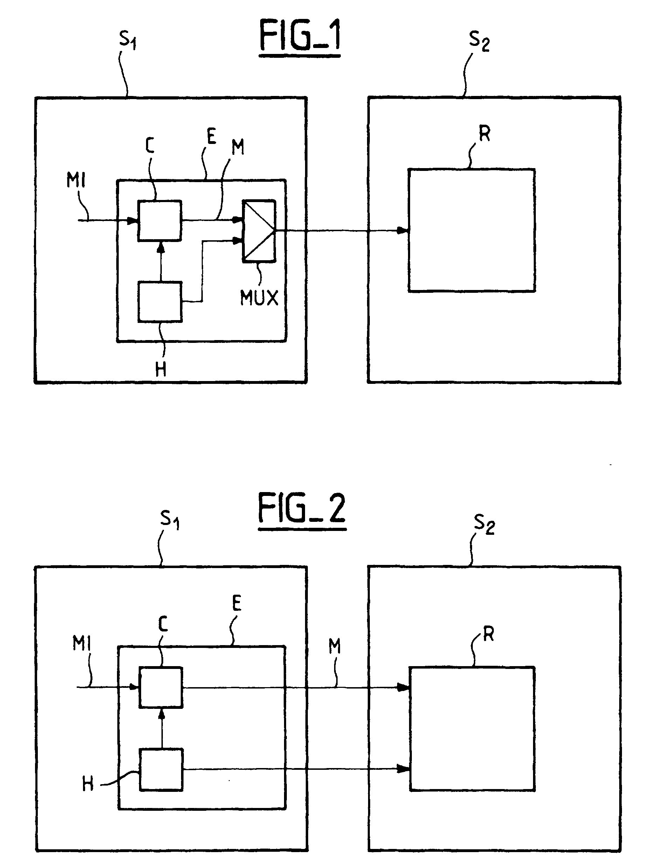

La figure 1 représente une première station S₁ comportant une partie émission E et une seconde station T₂ comportant une partie réception R.

Chaque message initial Mᵢ devant être transmis vers la seconde station est communiqué à un moyen C de construction de message. Le message sortant M construit par ce moyen est composé du message initial Mᵢ et de la date fournie par une horloge H.

La façon dont le message sortant M est construit est classique en soi. On peut écrire M = u(M_{I}, t), où t est la date fournie par l'horloge H. Classiquement, u est une fonction de codage correcteur d'erreurs ainsi qu'il est mentionné précédemment. La façon dont ce moyen C de construction de message est constitué est aisément accessible à l'homme du métier et en dehors de la présente invention.

L'émetteur E comporte aussi un moyen de multiplexage (MUX) qui envoie sur le canal de communication une alternance entre les dates fournies par l'horloge H et les messages sortant M provenant du moyen C de construction de messages.

Le tableau suivant illustre un extrait de communication entre l'émetteur et le récepteur en mettant en évidence l'alternance entre l'envoi des dates fournies par l'horloge H directement (t₁, t₃, t₄, t₆) et l'envoi des messages sortants (contenant les dates fournies par l'horloge H : t₂, t₅).

| |
|---|
| t₁ |
| M₁=u(M_{I1}, t₂) |
| t₃ |
| t₄ |
| M₂=u(M_{I2}, t₅) |
| t₆ |
| ... |

La figure 2 représente une seconde mise en oeuvre de l'invention. Cette mise en oeuvre comporte aussi une horloge H et un moyen C de construction de messages.

Les messages sortants M sont construits par le moyen C à partir des messages initiaux M_{I} et des dates fournies par l'horloge H, ainsi qu'il est décrit précédemment pour la première mise en oeuvre.

Par contre, contrairement à cette première mise en oeuvre, il n'existe pas de moyen de multiplexage. Au contraire, le message sortant M et la date fournie par l'horloge H sont transmises de façon indépendante et parallèle à destination du récepteur R d'une seconde station S₂.

## Revendications

1. Procédé de transmission d'un message dit initial (M,) entre deux stations de radiocommunication, éventuellement mobiles, consistant pour une première station de radiocommunication, à insérer une date fournie par une horloge (H) dans ledit message initial afin de former un message sortant (M), **caractérisé en ce qu'**il comporte une étape consistant à transmettre vers la seconde station de radiocommunication ledit message sortant (M) et les dates fournies par ladite horloge (H).

2. Procédé selon la revendication précédente, **caractérisé en ce que** ledit message sortant et lesdites dates successives sont multiplexées temporellement

3. Procédé selon la revendication 1, **caractérisé en ce que** lesdits messages sortants et lesdites dates successives sont transmises sur ledit réseau de radiocommunication en parallèle sur deux canaux de transmission différents.

4. Station de radiocommunication, éventuellement mobile, comportant une horloge (H), un moyen (C) permettant d'insérer des dates fournies par ladite horloge (H) à des messages initiaux (M_{I}) afin de donner des messages sortants (M), lesdites dates étant celles d'élaboration desdits messages sortants (M), et un moyen d'émission sur ledit réseau de radiocommunication desdits messages sortants (M), **caractérisé en ce qu'**il dispose de surcroît d'un moyen pour émettre les dates fournies par ladite horloge (H).

5. Station selon la revendication 4, **caractérisée en ce que** ledit moyen d'émission est un multiplexeur recevant en entrée lesdits messages sortants et lesdites dates successives.

6. Station selon la revendication 4, **caractérisée en ce que** ledit moyen d'émission permet l'émission en parallèle sur deux canaux de transmission différents, desdits messages sortant (M) et desdites dates successives.

## Claims

1. A method of transmitting an initial message (Mᵢ) between two radiocommunication stations, possibly mobile stations, in which a first radiocommunication station inserts a date supplied by a clock (H) in said initial message to form an outgoing message (M), **characterized in that** it comprises a step consisting in transmitting said outgoing message (M) and the dates supplied by said clock (H) to the second radiocommunication station.

2. A method according to the preceding claim **characterized in that** said outgoing message and said successive dates are time-division multiplexed.

3. A method according to claim 1 **characterized in that** said outgoing messages and said successive dates are transmitted over said radiocommunication network in parallel on two different transmission channels.

4. A radiocommunication station, possibly a mobile station, including a clock (H), means (C) for inserting dates supplied by said clock (H) into initial messages (Mᵢ) to form outgoing messages (M), said dates being the dates of production of said outgoing messages (M), and means for transmitting said outgoing messages (M) over said radiocommunication network, **characterized in that** it also has means for transmitting the dates supplied by said clock (H).

5. A station according to claim 4 **characterized in that** said transmitter means comprise a multiplexer receiving at its input said outgoing messages and said successive dates.

6. A station according to claim 4 **characterized in that** said transmitter means transmit said outgoing messages (M) and said successive dates in parallel on two different transmission channels.

## Patentansprüche

1. Verfahren zur Übertragung einer als anfängliche Nachricht (M_{I}) bezeichneten Nachricht zwischen zwei gegebenenfalls mobilen Funkstationen, für eine erste Funkstation darin bestehend, eine von einem Taktgenerator (H) gelieferte Datumsinformation in die besagte anfängliche Nachricht einzufügen, um so eine abgehende Nachricht (M) zu bilden, **dadurch gekennzeichnet, daß** dieses Verfahren einen Schritt beinhaltet, der darin besteht, die besagte abgehende Nachricht (M) und die vom besagten Taktgenerator (H) gelieferten Datumsinformationen an die zweite Funkstation zu übertragen.

2. Verfahren gemäß vorgenanntem Anspruch, **dadurch gekennzeichnet, daß** die besagte abgehende Nachricht und die besagten aufeinanderfolgenden Datumsinformationen im Zeitmultiplexverfahren übertragen werden.

3. Verfahren gemäß Anspruch 1, **dadurch gekennzeichnet, daß** die besagten abgehenden Nachrichten und die besagten aufeinanderfolgenden Datumsinformationen über das besagte Funknetz parallel auf zwei unterschiedlichen Übertragungskanälen übertragen werden.

4. Funkstation, gegebenenfalls mobil, beinhaltend einen Taktgenerator (H), eine Vorrichtung (C), welche es gestattet, von dem besagten Taktgenerator (H) gelieferte Datumsinformationen in anfänglichen Nachrichten (M_{I}) einzufügen, um so abgehende Nachrichten (M) zu erzeugen, wobei die besagten Datumsinformationen diejenigen zur Erstellung der besagten abgehenden Nachrichten (M) sind, sowie eine Vorrichtung zum Senden der besagten abgehenden Nachrichten (M) über das besagte Funknetz, **dadurch gekennzeichnet, daß** dieses ferner über eine Vorrichtung verfügt, die es gestattet, die von dem besagten Taktgenerator (H) gelieferten Datumsinformationen zu senden.

5. Station gemäß Anspruch 4, **dadurch gekennzeichnet, daß** die besagte Sendevorrichtung ein Multiplexer ist, der am Eingang die besagten abgehenden Nachrichten und die besagten aufeinanderfolgenden Datumsinformationen empfängt.

6. Station gemäß Anspruch 4, **dadurch gekennzeichnet, daß** die besagte Sendevorrichtung die Parallelübertragung der beiden besagten abgehenden Nachrichten (M) und der besagten aufeinanderfolgenden Datumsinformationen über zwei unterschiedliche Übertragungskanäle gestattet.
